(19)

Europäisches Patentamt

European Patent Office

Office européen des brevets

(11) **EP 2 047 292 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***G01S 7/40*** *(2006.01)*     ***G01S 13/10*** *(2006.01)*

(21) Anmeldenummer: **07819049.3**

(22) Anmeldetag: **17.10.2007**

(86) Internationale Anmeldenummer:
**PCT/EP2007/008981**

(87) Internationale Veröffentlichungsnummer:
**WO 2008/055581 (15.05.2008 Gazette 2008/20)**

(54) **VERFAHREN UND POSITIONSMESSVORRICHTUNG ZUR BESTIMMUNG EINER POSITION EINES MESSOBJEKTS**

METHOD AND POSITION MEASURING DEVICE FOR DETERMINING THE POSITION OF AN OBJECT TO BE MEASURED

PROCÉDÉ ET DISPOSITIF DE MESURE DE POSITION POUR DÉTERMINER UN OBJET À MESURER

(84) Benannte Vertragsstaaten:
**CH DE FR GB IT LI**

(30) Priorität: **09.11.2006 DE 102006052789**

(43) Veröffentlichungstag der Anmeldung:
**15.04.2009 Patentblatt 2009/16**

(73) Patentinhaber: **FESTO AG & Co. KG**
**73734 Esslingen (DE)**

(72) Erfinder:
• **REININGER, Thomas**
 **73249 Wernau (DE)**
• **MAIER, Marcus**
 **73760 Ostfildern (DE)**

• **VON ZEPPELIN, Matthias**
 **73669 Lichtenwald (DE)**

(74) Vertreter: **Bregenzer, Michael**
 **Patentanwälte**
 **Magenbauer & Kollegen**
 **Plochinger Strasse 109**
 **73730 Esslingen (DE)**

(56) Entgegenhaltungen:
 **DE-A1- 10 205 904    US-A- 4 902 961**

• **DISCLOSED ANONYMOUSLY: "Microwave Piston Position Detection" RESEARCH DISCLOSURE, MASON PUBLICATIONS, HAMPSHIRE, GB, Bd. 279, Juli 1987 (1987-07), Seiten 435A-435B, XP002104705 ISSN: 0374-4353**

EP 2 047 292 B1

**Beschreibung**

Die Erfindung betrifft eine Positionsmessvorrichtung mit einer Mikrowellen-Antennenanordnung zur Bestimmung einer Position eines in einem Bewegungsraum beweglichen Messobjekts anhand von Mikrowellen mindestens einer ersten Frequenz, wobei der Bewegungsraum zumindest teilweise einen Hohlleiter zum Leiten der Mikrowellen bildet.

Eine aus der DE 102 05 904 A1 bekannte Positionsmessvorrichtung hat eine Koppelsonde, die über ein dielektrisches Haltesystem mit einem Wellenleiter verbunden ist. Die Koppelsonde ist beispielsweise aus Metall. Ein vorgelagertes Schutzteil schützt die Koppelsonde mechanischen Beschädigungen. Die Positionsmessvorrichtung misst eine Position eines Kolbens, der in einem Zylindergehäuse eines pneumatischen Zylinders hin und her beweglich ist. Eine Koppelsonde koppelt die Mikrowellen in den Bewegungsraum für den Kolben ein, sodass die Mikrowellen in den Bewegungsraum, der einen Hohlleiter bildet, zum Kolben hin geleitet werden. Der Kolben bildet einen Reflektor für die Mikrowellen, sodass sie wieder über den Hohlleiter zu der Koppelsonde gelangen. Die Positionsmessvorrichtung bestimmt die Position des Kolbens in dem Bewegungsraum oder Hohlleiter anhand eines Phasenvergleiches der Mikrowellen.

Die Position und Qualität der Koppelsonde in Bezug auf den Bewegungsraum und somit den Hohlleiter ist für die Messgenauigkeit wesentlich. Bei der aus der DE 102 05 904 A1 bekannten Positionsmessvorrichtung sind eine Koppelsonde und ein dielektrisches Haltesystem dafür vorgesehen. Die Bauweise ist kompliziert.

Es ist daher die Aufgabe der vorliegenden Erfindung, die Messgenauigkeit einer Positionsmessvorrichtung zu verbessern.

Zur Lösung der Aufgabe ist bei der Positionsmessvorrichtung vorgesehen, dass die Mikrowellen-Antennenanordnung einen dielektrischen Antennenkörper zum Einkoppeln und/oder Auskoppeln der Mikrowellen in den Hohlleiter aufweist, dass an dem Antennenkörper eine erste Polfläche und eine zweite Polfläche, die der Antennenkörper elektrisch voneinander isoliert, angeordnet sind, dass sie eine Hochfrequenz-Mikrowellen-Sende-/Empfangseinrichtung zum Senden und Empfangen von Mikrowellen in der mindestens ersten Frequenz zur Positionsermittlung des beweglichen Messobjekts und in mindestens einer zweiten Frequenz zur Ermittlung mindestens einer elektrischen Eigenschaft des Antennenkörpers aufweist, und dass sie Messmittel zur Ermittlung der mindestens einen elektrischen Eigenschaft des Antennenkörpers anhand von innerhalb des Antennenkörpers reflektierter Mikrowellen in der mindestens einen zweiten Frequenz aufweist. Zur Lösung ist ferner ein Verfahren gemäß der technischen Lehre eines weiteren Anspruchs vorgesehen.

Das erfinderische Konzept sieht vor, dass die erste(n) Frequenz(en) zur Positionsbestimmung des Messobjektes dient(en). Die zweite Frequenz oder die zweiten Frequenzen hingegen dienen zur Bestimmung der elektrischen Eigenschaften des Antennenkörpers, insbesondere der Dielektrizitätszahl des Antennenkörpers. Die zweite Frequenz ist zweckmäßigerweise kleiner als die erste Frequenz. Beispielsweise beträgt die zweite Frequenz etwa 10 bis 50 % der ersten Frequenz. Die beiden Frequenzen liegen zweckmäßigerweise im Bereich von Mikrowellenfrequenzen, das heißt im Bereich von einem oder mehreren GHz. Es ist aber auch denkbar, dass die mindestens eine zweite Frequenz deutlich unterhalb der mindestens einen ersten Frequenz, z.B. im Bereich einiger MHz liegt.

Die erste Frequenz ist mindestens so groß wie eine Grenzfrequenz, bei der oder oberhalb derer sich Mikrowellen in dem Hohlleiter ausbreiten. Die zweite Frequenz ist zweckmäßigerweise kleiner als diese Grenzfrequenz. Man kann die erste Frequenz auch als eine Betriebsfrequenz zur Positionsbestimmung des Messobjektes betrachten.

An dem Antennenkörper sind zweckmäßigerweise Leitmittel angeordnet, die ein Ausbreiten der Mikrowellen mit der mindestens einen ersten Frequenz zum Messobjekt hin zulassen. Die Mikrowellen der zweiten Frequenz werden jedoch von den Leitmitteln zu der Sende- und Empfangseinrichtung zurückgeleitet, das heißt reflektiert.

Die Sende- und Empfangseinrichtung und die Leitmittel sind zweckmäßigerweise an einander entgegengesetzten ersten und zweiten Endseiten des Antennenkörpers angeordnet. Die Leitmittel sind im Bereich der zweiten Seite, das heißt nahe bei dem Hohlleiter, angeordnet. Somit haben die Mikrowellen der zweiten Frequenz, die zur Bestimmung der mindestens einen elektrischen Eigenschaft des Antennenkörpers dienen, eine große Laufzeit. Ferner werden die Eigenschaften des Antennenkörpers weiträumig erfasst. Die Leitmittel sind zum Beispiel an oder hinter einer Stirnseite des Antennenkörpers angeordnet, die zu dem Hohlleiter orientiert ist.

Die Leitmittel können beispielsweise eine Hochfrequenz-Schaltdiode umfassen. Da derartige Bauteile jedoch verhältnismäßig teuer sind, ist es vorteilhaft, wenn die Leitmittel mindestens einen Schwingkreis mit mindestens einer Induktivität und einer Kapazität umfassen. Die Induktivität und Kapazität können in Reihe oder parallelgeschaltet sein. Die Induktivität kann beispielsweise durch zu der Kapazität führende elektrische Leiterabschnitte gebildet sein. Die Leiterabschnitte haben eine parasitäre Induktivität, beispielsweise 1nH/mm (1 Nano-Henry/mm). Die Kapazität liegt im Bereich weniger pF (Picofarad). Beispielsweise beträgt die Leiterlänge der Induktivität 10 mm und somit die Induktivität 10 nH, was zusammen mit einer Kapazität von 2,5 pF eine Resonanzfrequenz von 1 GHz ergibt. Der Schwingkreis, insbesondere der Serienschwingkreis, stellt bei seiner Resonanzfrequenz einen Kurzschluss dar und bewirkt eine ideale Reflexion der Welle. Dies wird erfindungsgemäß zur Messung der Dielektrizitätszahl des Antennenkörpers und/oder weiterer Kunststoffbestandteile der Mikrowellen-Antennenanordnung, genutzt. Die ersten Frequenzen, die zur Positionsbestimmung des Messobjektes dienen, sind zweckmäßigerweise weit von der Resonanzfrequenz des Schwingkreises entfernt, sodass der Serienschwingkreis die Mikrowellen mit der mindestens einen ersten Frequenz nicht oder nur unwesentlich beeinflusst. Somit kann die Positionsbestimmung des Messobjektes unbeeinträchtigt durchgeführt werden.

Der Antennenkörper verhält sich bei der Resonanzfrequenz des Schwingkreises wie eine kurzgeschlossene elektrische Leitung.

Sofern eine elektrische Leitung an Ihrem Ende kurzgeschlossen ist, gilt für die Phase $\varphi$ eines Eingangsreflexionsfaktors der Leitung:

$$\varphi = \pi - 4\pi(x/\lambda) \qquad\qquad (1)$$

wobei $\lambda$ die Wellenlänge der Mikrowellen und x die Position des Kurzschlusses gemessen vom Eingang der Leitung sind. Der Antennenkörper ist bei der zweiten Frequenz zur Ermittlung mindestens einer elektrischen Eigenschaft des Antennenkörpers zweckmäßigerweise durch einen Schwingkreis kurzgeschlossen, wobei x die Position des Schwingkreises gemessen vom Eingang des Antennenkörpers ist.

Der Antennenkörper stellt ein Dielektrikum mit einer Dielektrizitätszahl $\varepsilon r$ dar, so dass die Wellenlänge $\lambda$ im folgenden Verhältnis zur Wellenlänge $\lambda 0$ im Freiraum steht:

$$\lambda = \lambda 0 \ / \ SQRT \ (\varepsilon r) \quad bzw. \quad \lambda = \frac{\lambda 0}{\sqrt{\varepsilon r}} \qquad\qquad (2)$$

mit

$$\lambda 0 = c0/fres \quad bzw. \quad \lambda 0 = \frac{c0}{fres} \qquad\qquad (3)$$

wobei c0 die Lichtgeschwindigkeit und fres die Resonanzfrequenz des Schwingkreises sind. Die Resonanzfrequenz fres entspricht der zweiten Frequenz der Mikrowellen. Somit kann aus einer gemessenen Phase $\varphi$ des Eingangsreflexionsfaktors anhand von (1) bis (3) die Dielektrizitätszahl $\varepsilon r$ des Antennenkörpers ermittelt werden.

Die Leiterabschnitte des Schwingkreises können beispielsweise als Oberflächen-Beschichtungen des Antennenkörpers ausgeführt sein und beispielsweise an der dem Bewegungsraum oder Hohlleiter zugewandten Stirnseite des Antennenkörpers angeordnet sein. Ferner ist es möglich, dass elektrische Leiter, zum Beispiel Stifte, im Innern des Antennenkörpers angeordnet sind. Zwischen den Leiterabschnitten befindliche Abstände können die Kapazität bilden. Ferner kann die Kapazität durch ein diskretes Kondensator-Bauteil gebildet sein.

Die Positionsmessvorrichtung ist zweckmäßigerweise zur Ermittlung der Resonanzfrequenz des Schwingkreises ausgestaltet, wobei sie die zweite Frequenz variiert. Die Resonanzfrequenz des Schwingkreises ändert sich beispielsweise in Abhängigkeit eines Abstandes des Messobjektes von dem Antennenkörper. Der Betrag des Reflexionsfaktors des Antennenkörpers bei der zweiten Frequenz sinkt durch den Einfluss des Messobjektes. An dem Messobjekt tritt ein elektrischer Verlust auf.

Die Variation der zweiten Frequenz kann auch als Frequenz-Sweep bezeichnet werden. Anhand der Größe der Resonanzverschiebung des Serienschwingkreises kann auf die Position des Messobjekts, beispielsweise eines Kolbens, im Nahbereich bei dem Antennenkörper nach dem Prinzip eines induktiven oder kapazitiven Näherungssensors geschlossen werden. Dadurch wird auch im Bereich nahe bei dem Antennenkörper eine hohe Messgenauigkeit erzielt.

Die zweite Frequenz kann auch konstant eingestellt sein. Dann wird beispielsweise die Resonanzfrequenz des Schwingkreises nachgeführt oder nachgeregelt. Der Schwingkreis wird sozusagen durchgestimmt. Vorteilhaft kann die beispielsweise eine Kapazität im Schwingkreis geändert werden. Eine Kapazität einer Kapazitätsdiode ist z.B. variabel und durch Anlegen einer Steuerspannung veränderbar.

Die Positionsmessvorrichtung ermittelt beispielsweise die Resonanzfrequenz dadurch, dass sie einen Wendepunkt der Phase des Eingangsreflexionsfaktors ermittelt. Aus der gemessenen Phase kann dann gemäß den obigen Formeln (1) bis (3) die Dielektrizitätszahl des Antennenkörpers ermittelt werden.

Ferner ist es möglich, dass die Messmittel eine Position des Messobjekts in dem Nahbereich relativ zu dem Antennenkörper anhand der sich einstellenden Resonanzfrequenz oder Verschiebung der Resonanzfrequenz ermitteln.

Bei der Resonanzfrequenz des Serienschwingkreises sinkt der Betrag des Eingangsreflexionsfaktors durch elektrische Verluste auf einen Wert < 1.

Ferner hat der Phasenverlauf des Reflexionsverlaufs einen Wendepunkt.

Das vorgenannte Verfahren eignet sich prinzipiell für beliebige dielektrische Antennenkörper, an denen elektrische Polflächen angeordnet sind. Besonders bevorzugt ist jedoch eine Bauweise des Antennenkörpers, bei dem die Polflächen, einen Koaxialleiterabschnitt bildend, an dem Antennenkörper angeordnet sind. Eine Stirnseite des Koaxialleiterabschnittes mit einem ringförmigen Isolationsbereich zwischen den Polflächen ist vorteilhaft zu dem Messobjekt hin orientiert. An der Stirnseite kann eine Schutzschicht oder Oberflächenbeschichtung vorhanden sein, um Umwelteinflüsse auf den Antennenkörper zu verringern oder zu vermeiden.

Der Antennenkörper ist zweckmäßigerweise zur Bildung der ersten und/oder der zweiten Polfläche mit einer elektrisch leitfähigen Beschichtung versehen, beispielsweise einer Metallisierung.

Die Beschichtung ist aus beispielsweise Kupfer und/oder Nickel und/oder Aluminium und/oder Gold oder einem sonstigen elektrisch leitfähigen Material. Die Beschichtung kann z.B. durch Galvanisieren und/oder durch ein Bedampfungsverfahren hergestellt werden, beispielsweise ein physikalisches und/oder chemisches Bedampfungsverfahren (PVD = Physical Vapor Deposition / CVD = Chemical Vapor Deposition). Bei dem Antennenkörper kann es sich aber auch um einen dreidimensionalen Leiterkörper handeln, beispielsweise einen sogenannten MID-Leiterkörper (MID = Moulded Interconnect Device).

Das bewegliche Messobjekt, beispielsweise das Aktorglied oder ein Ventilglied, reflektiert Mikrowellen, die mit Hilfe der Koppelsonde in die Leitungsstruktur bzw. das Gehäuse eingekoppelt werden. Anhand einer Laufzeitmessung und/oder anhand eines Phasenvergleichs zwischen ausgesendeten Mikrowellen und empfangenen Mikrowellen, die beispielsweise einen Frequenzbereich von 10 MHz - 25 GHz, vorteilhaft 1 GHz - 25 GHz, haben, ermittelt die Positionsmessvorrichtung einen jeweiligen Abstand des Messobjekts von der Koppelsonde. Es versteht sich, dass die Mikrowellen-Antennenanordnung auch zwei Koppelsonden enthalten kann, eine zum Senden und eine zum Empfangen von Mikrowellen. Besonders bevorzugt ist jedoch, wenn nur eine einzige Koppelsonde erforderlich ist.

Beispielsweise bildet die Positionsmessvorrichtung einen Bestandteil einer Aktorvorrichtung. Die Aktorvorrichtung, z.B. ein elektrischer und/oder fluidtechnischer Antrieb hat ein elektrisch leitfähiges Gehäuse, in dem ein Aktorglied, beispielsweise ein Läufer eines elektrischen Motors oder ein Kolben eines pneumatischen Antriebs, beweglich angeordnet ist. Das Aktorglied ist vorzugsweise linear beweglich. Die Positionsmessvorrichtung misst z.B. den Abstand des Aktorglieds von einem Endanschlag.

Die erfindungsgemäße Positionsmessvorrichtung kann aber auch einen Bestandteil eines fluidtechnischen Wartungsgerätes bilden, beispielsweise eines pneumatischen Wartungsgerätes. Die Positionsmessvorrichtung dient dann beispielsweise zur Mengenmessung eines Additivs für das Fluid, beispielsweise eines Öls, das in das Fluid eingespritzt wird, oder zu Messungen eines Ausscheidungsprodukts, das das Wartungsgerät aus dem Fluid extrahiert und in einem Aufnahmeraum deponiert. Die Positionsmessvorrichtung misst den Füllstand des Additivs bzw. des Ausscheidungsprodukts in dem Aufnahmeraum.

Eine weitere Variante der Erfindung kann vorsehen, dass die Positionsmessvorrichtung einen Bestandteil eines Fluidventils bildet, beispielsweise eines pneumatischen Ventils. Das Messobjekt ist in diesem Falle z.B. das Ventilglied des Fluidventils, beispielsweise ein Antriebskolben, mit dem das Ventilglied pneumatisch angetrieben wird.

Nachfolgend werden Ausführungsbeispiele der Erfindung anhand der Zeichnung näher erläutert. Es zeigen:

Fig. 1        eine schematische Querschnittsansicht eines Aktors, der eine erfindungsgemäße Positionsmessvorrichtung aufweist,

Fig. 1a        einen alternativ an dem Aktor gemäß Figur 1 anordenbaren Gehäusedeckel mit einem zweiten Ausführungsbeispiel einer Positionsmessvorrichtung,

Fig. 2a        eine Querschnittsansicht etwa entsprechend einer Linie A-A der Aktorvorrichtung gemäß Figur 1,

Fig. 2b        eine Querschnittsansicht etwa entsprechend einer Linie B-B der Aktorvorrichtung gemäß Figur 1,

Fig.3a-3c        Ausführungsbeispiele von in der Positionsmessvorrichtung gemäß Figur 1 enthaltenen Schwingkreisen,

Fig. 4        ein Prinzipschaltbild des Ausführungsbeispiels gemäß Figur 1a,

Fig. 4a        ein in seiner Resonanzfrequenz änderbarer Schwingkreis als Alternative zum Schwingkreis des Prinzipschaltbilds gemäß Figur 4, eingezeichnet als ein Ausschnitt IV von Figur 4,

Fig.5a, 5b     eine schematische Querschnittsansicht und eine schematische Längsansicht einer Heizeinrichtung mit einem ringförmigen Heizleiter sowie mit TEM-Mikrowellen,

Fig.6a, 6b     eine Querschnittsansicht und eine Längsschnittansicht einer Heizeinrichtung mit einem ringförmigen Heizleiter sowie E01-Mikrowellen,

Figur 6c     eine Mikrowellen-Antennenanordnung für E01-Mikrowellen,

Fig.7a, 7b     eine Querschnittansicht und eine Längsschnittansicht einer Heizeinrichtung mit zwei ineinander liegenden Heizleiterringen sowie H11-Mikrowellen

Figur 7c     eine Mikrowellen-Antennenanordnung für H11-Mikrowellen,

Fig. 8a,     8b eine Querschnittsansicht und einen Längsschnitt einer Heizeinrichtung mit mehreren flügelradartigen Heizleitern sowie H01-Mikrowellen und

Figur 8c     eine Mikrowellen-Antennenanordnung für H01-Mikrowellen.

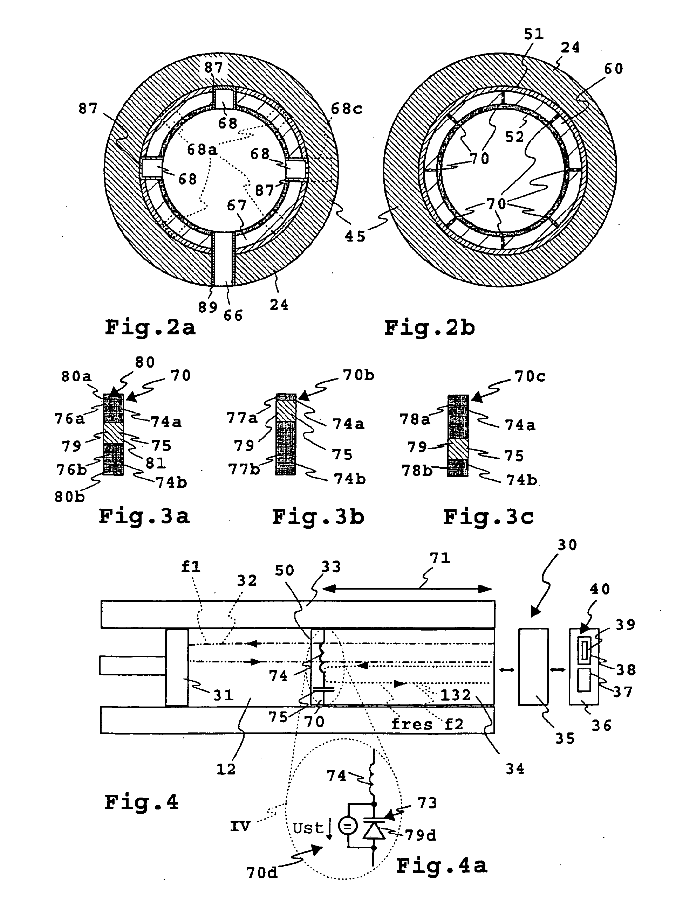

Bei einer Aktorvorrichtung 10, beispielsweise einem pneumatischen Arbeitszylinder 11, ist ein Aktorglied 14 in einem durch ein Gehäuse 13 gebildeten Bewegungsraum 12 beweglich angeordnet. Das Aktorglied 14 ist beispielsweise ein Kolben 15 des pneumatischen Arbeitszylinders 11. Das Gehäuse 13 hat im vorliegenden Fall einen kreisrunden Querschnitt, wobei auch andere Querschnittsformen denkbar sind, z.B. polygonale. Der Bewegungsraum 12 ist ein Innenraum des Gehäuses 13. Die Aktorvorrichtung 10 ist eine fluidtechnische Aktorvorrichtung. Eine Ventilanordnung 16 speist Druckluft 17 aus einer Druckluftquelle 18 in Druckluftanschlüsse 19, 20 des Gehäuses 13 ein, sodass der Kolben 15 mit der Druckluft 17 beaufschlagt wird und in dem Bewegungsraum 12 linear hin und her bewegt wird. An einem Außenumfang des Kolbens 15 ist eine Dichtung 21 angeordnet.
Das Gehäuse 13 umfasst beispielsweise ein Mittelteil 22 sowie einen Lagerdeckel 23 und einen Abschlussdeckel 24. Der Lagerdeckel 23 wird von einer Kolbenstange 25, die an dem Kolben 15 angeordnet ist, durchdrungen. Die Kolbenstange 25 bildet beispielsweise einen Kraftabgriff. Am Kolben 15 ist in Richtung des Abschlussdeckels 24 eine Dämpfereinrichtung 26 angeordnet. Die Dämpfereinrichtung 26, die eine vor den Kolben 15 vorstehende Einrichtung bildet, dämpft einen Aufprall des Aktorglieds 14 auf einen Endanschlag 27 im Bereich des Abschlussdeckels 24. Die Dämpfereinrichtung 26 dringt in eine Ausnehmung 28 des Abschlussdeckels 24 ein und vermindert beispielsweise das Ausströmen von Druckluft 27 aus dem Druckluftanschluss 20, was die Dämpfung bewirkt. Die Dämpfereinrichtung 26 ist wie die übrigen Komponenten der Aktorvorrichtung 10 lediglich schematisch dargestellt.
Eine Positionsmessvorrichtung 30 dient zur Bestimmung einer Position 29 des Aktorglieds 14 in dem Bewegungsraum 12, beispielsweise eines Abstandes des Aktorglieds 14 von dem Endanschlag 27. Das Aktorglied 14 bildet ein Messobjekt 31 für die Positionsmessvorrichtung 30. Die Positionsmessvorrichtung 30 ermittelt die Position 29 mittels Mikrowellen 32, die sie in den elektrisch leitenden und zumindest teilweise einen Hohlleiter 33 bildenden Bewegungsraum 12 mittels einer Mikrowellen-Antennenanordnung 34 sendet. Die Mikrowellen 32 liegen beispielsweise in einem Frequenzbereich von 0,3 GHz bis 300 GHz, wobei für die Leitung in dem Hohlleiter 33 ein Frequenzbereich von mindestens 1 GHz zweckmäßig ist.
Das Gehäuse 13 besteht im Wesentlichen aus Metall, sodass die Mikrowellen 32 in dem Gehäuse 13 beziehungsweise dem Hohlleiter 33 von der Mikrowellen-Antennenanordnung 34 zu dem Messobjekt 31 beziehungsweise Aktorglied 14 gelangen. Das Aktorglied 14 ist zumindest an seiner der Positionsmessvorrichtung 30 zugewandten Vorderseite elektrisch leitend, sodass die Mikrowellen 32 von dem Aktorglied 14 oder Messobjekt 31 reflektiert und von dem Hohlleiter zurück zu der Positionsmessvorrichtung 30 geleitet werden. Ein beispielhafter Signalfluss der Mikrowellen 32 ist in Figur 4 angedeutet.
Eine Hochfrequenz-Mikrowellen-Sende- und -empfangseinrichtung 35 erzeugt und empfängt die Mikrowellen 32. Die Sende-/Empfangseinrichtung 35 kann Mikrowellen in unterschiedlichen Qualitäten erzeugen, beispielsweise mit wechselnden Frequenzen, gepulste Mikrowellen, frequenzmodulierte Mikrowellen oder dergleichen.
Eine Auswerteeinrichtung 36 ermittelt beispielsweise anhand der Laufzeit von Pulsen der Mikrowellen 32 (Pulsradar), anhand von Phasenverschiebungen 32 zwischen hinlaufenden und rücklaufenden Mikrowellen (Interferometer-Verfahren), anhand eines FMCW-Verfahrens (Frequency Modulated Continuous Wave) <oder dergleichen die Position 29 des Messobjekts 31.
Die Auswerteeinrichtung 36 enthält beispielsweise einen Prozessor 37 sowie Speicher 38 zur Ausführung und Speicherung von Programmcode eines Messmoduls 39, das die vorgenannte Positionsmessfunktionen des Messobjektes 31 durchführt. Der Prozessor 37, der Speicher 38 sowie das Messmodul 39 bilden Messmittel 40. Die Auswerteeinrichtung 36 sendet z.B. drahtgebunden (nicht dargestellt) oder drahtlos über eine Antenne 41 Positionswerte 42 beispielsweise an eine übergeordnete, nicht dargestellte Steuerung.

Ein Antennenkörper 50 der Antennenanordnung 34 ist in einer Aufnahme 43 des Abschlussdeckels 24 angeordnet. An dem Antennenkörper 50 sind eine erste Polfläche 51 und eine zweite Polfläche 52 koaxial angeordnet. Der Antennenkörper 50 besteht aus einem dielektrischen Material, beispielsweise aus einem Kunststoff, und isoliert die Polflächen 51, 52 voneinander. Die Polflächen 51, 52 sind durch elektrisch leitfähige Beschichtungen 53, 54 gebildet. Der Antennenkörper 50 bildet eine Koppelsonde zum Einkoppeln und Auskoppeln der Mikrowellen 32 in beziehungsweise aus dem Hohlleiter 33. Beim Ausführungsbeispiel ist der Antennenkörper 50 unmittelbar in die Aufnahme 43 eingesetzt. Es versteht sich, dass auch eine Trägerstruktur, insbesondere aus einem dielektrischen Material, zum Halten des Antennenkörpers 50 vorgesehen sein kann.

Der Antennenkörper 50 bildet im Wesentlichen einen Koaxialleiter 55 mit der außen liegenden ersten (51) und der innen liegenden zweiten Polfläche 52. Die zweite Polfläche 52 ist als ein hohler Innenleiter 56 ausgestaltet.

Ein Koaxialleiterabschnitt 57 des Koaxialleiters 55 bildet eine Aperturantenne 58. Eine Stirnseite 59 des Koaxialleiterabschnitts 57 mit einem ringförmigen Isolationsbereich 60 ist in den Bewegungsraum 12, das heißt zum Messobjekt 31 hin, orientiert. Der ringförmige Isolationsbereich 60 befindet sich zwischen der ersten und zweiten Polfläche 51, 52. Der vordere Teil des Koaxialleiterabschnitts 57 ist als Koaxialleiter-Tubusabschnitt 61 ausgestaltet, der die Ausnehmung 28 aufweist. Die Ausnehmung 28 ist becherförmig. Der Koaxialleiter-Tubusabschnitt 61 ist konzentrisch zu dem Bewegungsraum 12.

Der Koaxialleiter-Tubusabschnitt 61 kann über einen Koaxialleiter-Verbindungsabschnitt 62 mit der Sende-/Empfangseinrichtung 35 verbunden sein. Der Verbindungsabschnitt 62 ist als ein Koaxialleiter 63 ausgestaltet, dessen Außenleiter durch die sich bis zur Sende-/Empfangseinrichtung 35 erstreckende außenseitige erste Polfläche 51 gebildet ist. Ein Innenleiter 64 im Innern des Koaxialleiter 63 dient zur Verbindung der Sende-/Empfangseinrichtung 35 mit der an der Innenseite der Ausnehmung 28 angeordneten zweiten Polfläche 52. Die Anpassungsstruktur 65 enthält beispielsweise eine topfartige Leitstruktur, in die sich der Innenleiter 64 hinein erstreckt. Zwischen der Anpassungsstruktur 65 und dem Innenleiter 64 besteht keine elektrische Verbindung.

Die Anpassungsstruktur 65 dient zur Anpassung der Impedanz der Antennenanordnung 34 an die Generator- oder Empfängerimpedanz der Sende-/Empfangseinrichtung 35.

Der Verbindungsabschnitt 62 hat einen kleineren Durchmesser als der Koaxialleiter-Tubusabschnitt 61, der zum Ein- und Auskoppeln der Mikrowellen 32 in den oder aus dem Hohlleiter 33 dient.

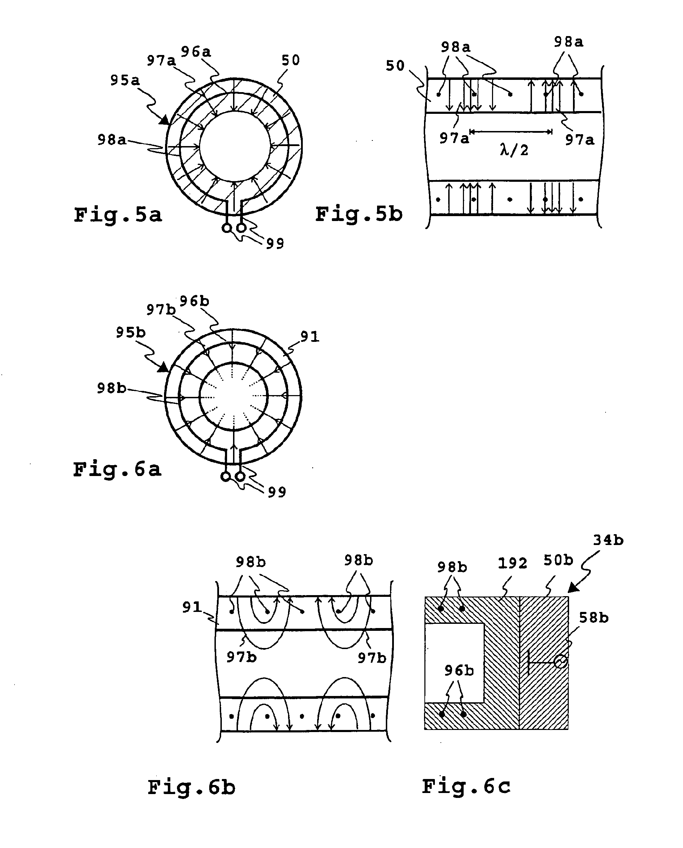

Der Tubusabschnitt 61 und der Hohlleiter 33 sind zueinander koaxial. Die äußere erste Polfläche 61 ist elektrisch mit einer Innenseite des Hohlleiters 33 verbunden. Im Bereich des Verbindungsabschnitts 62 sowie des Tubusabschnittes 61 sind die Mikrowellen 32 beispielsweise TEM-Mikrowellen. In dem Hohlleiter 33 sind die Mikrowellen 32 hingegen zweckmäßigerweise E01-Wellen mit einem Feldverlauf 97b (siehe Figur 6a).

E01-Mikrowellen können auch unmittelbar durch eine schematische dargestellte Mikrowellen-Antennenanordnung 34b mit einer E01-Antenne 58b erzeugt werden. Die Antenne 58b ist z.B. an oder in einem dielektrischen Antennenkörper 50b angeordnet, der bei einer Aktorvorrichtung in der Art des Antennenkörpers 50 verwendbar ist. Eine Schutzeinrichtung 192 ist der Mikrowellen-Antennenanordnung 34b vorteilhaft vorgelagert und schützt diese vor Umwelteinflüssen.

Die Stirnseite 49 ist zu dem Hohlleiter 33 hin frei, sodass sie eine freie Stirnfläche aufweist. Prinzipiell wäre es nun denkbar, dass die Stirnfläche einen Anschlag für das Messobjekt 31 beziehungsweise das Aktorglied 14 bildet. Zweckmäßigerweise ist jedoch der Antennenkörper 50 hinter den Anschlag 27 des Gehäuses 13, z.B. eine Stirnwand des Abschlussdeckels 24, zurückversetzt, sodass das Aktorglied 14 nicht auf den Antennenkörper 50 auftrifft, was möglicherweise die Messgenauigkeit beeinträchtigen könnte.

Ein Fluidkanal 66, z.B. ein Druckluftkanal, dient zur Einspeisung von Druckluft über den Druckluftanschluss 19 in die Ausnehmung 28. Der Fluidkanal 66 verläuft radial durch eine Umfangs-Wandung 67 des Koaxialleiterabschnitts 57. Damit sich die Mikrowellen 32 in dem Koaxialleiterabschnitt 57 symmetrisch und ungestört ausbreiten können, sind Kompensationsmittel vorgesehen. Die Kompensationsmittel enthalten beispielsweise einen oder mehrere Kompensationskanäle 68. Dabei ist es zweckmäßig, wenn eine geradzahlige Anzahl von Kompensationskanälen 68 vorhanden ist. Beispielsweise verläuft ein Kompensationskanal 68 an einer dem Fluidkanal 66 gegenüberliegenden Seite der Wandung 67. Weitere Kompensationskanäle 68 können quer zum Druckluftkanal oder Fluidkanal 66 vorgesehen sein. Weitere, in geradzahliger Anzahl vorhandene Kompensationskanäle 68a sind ebenfalls rotationssymmetrisch bezüglich der Kompensationskanäle 68 angeordnet, wobei beispielsweise jeweils zwischen zwei Kompensationskanälen 68 ein Kompensationskanal 68 mittig angeordnet ist. Die Kompensationskanäle 68 sind Blindkanäle oder Sackkanäle. Die Kompensationskanäle 68, 68a verhindern die Bildung unerwünschter Moden bei den Mikrowellen in dem Koaxialleiterabschnitt 57. Beim Beispiel gemäß Fig. 2a erstrecken sich die Kompensationskanäle 68, 68a nur in den Bereich der Wandung 67 des Antennenkörpers 50 hinein. Es wäre auch denkbar, dass sich Kompensationskanäle bis in eine Wandung 45 des Gehäuses 13 beziehungsweise des Abschlussdeckels 24 hinein erstrecken. Dies ist am Beispiel eines Kompensationskanals 68c beispielhaft dargestellt.

Bauelemente 46, beispielsweise Ein- und Auskopplungselemente für zu sendende und zu empfangende Mikrowellen, Kondensatoren, Millimeterwellen-Integrated-Circuits, Richtkoppler, Mikrostripstrukturen oder dergleichen sind an einer Tragstruktur 47 an der von dem Hohlleiter 33 abgewandten Seite der Positionsmessvorrichtung 30 angeordnet. Die Tragstruktur 47 bildet zweckmäßigerweise einen Bestandteil des Antennenkörpers 50.

Der Koaxialleiterabschnitt 57 ist sozusagen ein abgeschnittener Koaxialleiter, der mit seiner strahlenden Apertur in den Hohlleiter 33 beziehungsweise den Bewegungsraum 12 mündet. Ein Vorteil dieser Konstruktion ist, dass separate Halteeinrichtungen für eine Koppelsonde, beispielsweise eine pilzartige metallische Koppelsonde oder dergleichen, nicht erforderlich sind. Vielmehr sind die Abstände zwischen den Polflächen 51, 52 im Wesentlichen konstant, sodass die Messeigenschaften der Antennenanordnung 34 optimal sind.

Allerdings haben die Erfinder erkannt, dass der Antennenkörper 50 seine dielektrischen Eigenschaften im Laufe der Zeit, beispielsweise durch Umwelteinflüsse, verändern kann. Es ist zum Beispiel denkbar, dass der Feuchtigkeitsgehalt des Antennenkörpers 50 während des Betriebs der Aktorvorrichtung 10 schwankt, worunter die Messgenauigkeit der Positionsmessvorrichtung 30 leidet.

Veränderte dielektrische Eigenschaften des Antennenkörpers 50 können durch das nachfolgend beschriebene Messverfahren ermittelt und bei späteren Messungen der Position 29 des Messobjekts 31 berücksichtigt werden:

Die Sende- und Empfangseinrichtung 35 ist zum Senden der Mikrowellen 32 mit einer ersten Frequenz oder mit ersten Frequenzen f1 ausgestaltet. Zur Messung mindestens einer elektrischen Eigenschaft, beispielsweise der Dielektrizitätszahl, des Antennenkörpers 50 kann die Sende-/Empfangseinrichtung 35 aber auch Mikrowellen 132 mindestens einer zweiten Frequenz f2 senden und empfangen. Die Mikrowellen 132 sind zur Ausbreitung und zur Reflexion innerhalb des Antennenkörpers 50 ausgestaltet. Die mindestens eine zweite Frequenz f2 ist zweckmäßigerweise kleiner als eine Grenzfrequenz, die zur Ausbreitung von Mikrowellen in dem Hohlleiter 33 erforderlich ist.

Die Anpassungsstruktur 65 ist so beschaffen, dass sie die ersten und zweiten Frequenzen f1 und f2 durchlässt.

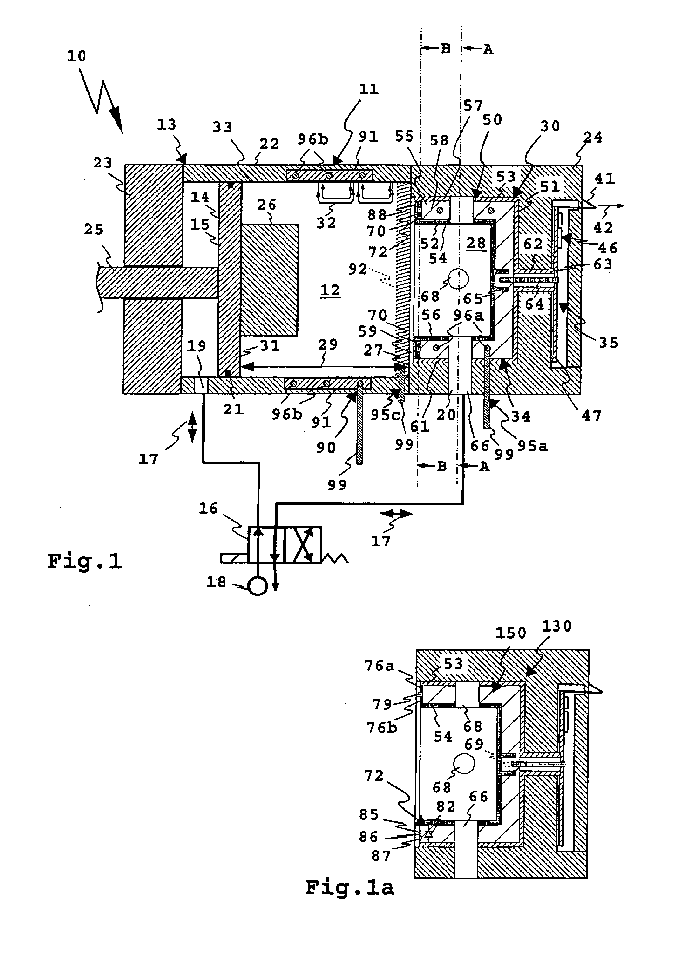

Anstelle der Anpassungsstruktur 65 kann auch eine elektrisch direkt ankoppelnde Verbindung sein, z.B. eine leitende Verbindung 69 zwischen dem Innenleiter 64 und der zweiten Polfläche 52. Die direkt ankoppelnde Verbindung lässt die ersten und zweiten Frequenzen f1 und f2 durch und leitet die später noch erläuterte Steuergleichspannung Ust. Die Verbindung 69 ist als eine Option gestrichelt in Figur 1a eingezeichnet.

Die Mikrowellen 132 werden innerhalb des Antennenkörpers 132 reflektiert und dienen zur Ermittlung einer Dielektrizitätszahl des Antennenkörpers 50. Schwingkreise 70 bilden für die Mikrowellen 132 einen zumindest fast idealen Kurzschluss -bis auf beispielsweise Schwingkreisverluste.

Die Schwingkreise 70 sind sternförmig im Bereich der Stirnseite 59 des Antennenkörpers 50 angeordnet.

Somit legen die Mikrowellen 132 einen möglichst langen Weg innerhalb des Antennenkörpers 50 zurück. Der Weg der Mikrowellen 132 erstreckt sich von der Sende-/Empfangseinrichtung 35 bis nach vorn in den Bereich der Stirnseite 59, sodass die dielektrischen Eigenschaften nahezu der gesamten Längserstreckungsrichtung des Antennenkörpers 50 Einfluss auf das Messergebnis haben.

Die Sende-/Empfangseinrichtung 35 variiert die Frequenz f2 vorteilhaft so lange, bis eine Resonanzfrequenz fres der Schwingkreise 70 aufgefunden ist. Die Sende-/Empfangseinrichtung 35 nutzt zum Auffinden der Resonanzfrequenz z.B. aus, dass der Betrag eines Reflexionsfaktors, den die Sende-/Empfangseinrichtung 35 "sieht", im Bereich der Resonanzfrequenz fres durch die bei Resonanz auftretenden Verluste kleiner, meistens sogar deutlich kleiner, als 1 ist. Ferner hat der Phasenverlauf des Reflexionsfaktors eine Wendestelle. Ein Abstand 71 zwischen der Sende- und Empfangseinrichtung 35 und den Schwingkreisen 70 ist konstant und bekannt.

Die Sende-/Empfangseinrichtung 35 kann zum Auffinden der Resonanzfrequenz auch Resonanzfrequenzen des oder der Schwingkreise durchstimmen. Die Frequenz f2 ist dann vorteilhaft konstant.

Z.B. kann anstelle eines Kondensators mit einem festen Kapazitätswert ein Bauelement 73 mit einer variablen Kapazität verwendet werden. Beispielsweise ist die Kapazität 75 durch eine Kapazität C(Ust) einer Kapazitätsdiode 79d eines Schwingkreises 70d gebildet und durch Anlegen einer Steuergleichspannung Ust variabel steuerbar. Die Steuergleichspannung Ust liegt in Sperrrichtung an der Kapazitätsdiode 79d an. Die Kapazitätsdiode 79d kann auch durch eine Hochfrequenzschaltdiode gebildet sein.

Denkbar wäre auch eine variable Induktivität eines Schwingkreises zum Auffinden seiner Resonanzfrequenz.

Die Anpassungsstruktur 65 ist vorteilhaft so beschaffen, dass sie die Steuergleichspannung Ust leitet.

Somit ist eine Position des Kurzschlusses bei den Schwingkreisen 70 bekannt. Aus der Phase zwischen gesendeten und empfangenen Mikrowellen 132 kann auf die relative Dielektrizitätszahl $\varepsilon$r des Dielektrikums, das der Antennenkörper 50 enthält, geschlossen werden. Dabei gilt für die Phase $\varphi$ eines Eingangsreflexionsfaktors des an seinem stirnseitigen Ende durch die Schwingkreise 70 kurzgeschlossen Antennenkörpers 50:

$$\varphi = \pi - 4\pi(x / \lambda) \qquad\qquad (1)$$

wobei $\lambda$ die Wellenlänge der Mikrowellen 132 und x die Position des Kurzschlusses gemessen von der Sende-/Empfangseinrichtung 35 sind. Der Antennenkörper 50 stellt ein Dielektrikum mit einer Dielektrizitätszahl εr dar, so dass die Wellenlänge λ im Verhältnis zur Wellenlänge λ0 im Freiraum steht:

$$\lambda = \lambda 0 \ / \ \text{SQRT} \ (\varepsilon r) \quad \text{bzw.} \quad \lambda = \frac{\lambda 0}{\sqrt{\varepsilon r}} \qquad (2)$$

mit c0 als der Lichtgeschwindigkeit und fres der Resonanzfrequenz der Schwingkreise 70 gilt:

$$\lambda 0 = \text{c0/fres} \quad \text{bzw.} \quad \lambda 0 = \frac{c0}{fres} \qquad (3)$$

Somit kann aus einer gemessenen Phase φ des Eingangsreflexionsfaktors anhand von (1) bis (3) die Dielektrizitätszahl εr des Antennenkörpers ermittelt werden.

Die Schwingkreise 70 sind Serienschwingkreise und bilden Leitmittel 72, die bei den Mikrowellen 132 der zweiten Frequenz f2 wirksam sind. Die Schwingkreise 70 weisen eine Induktivität 74 sowie eine Kapazität 75 auf, die in Reihe geschaltet sind.

Die Induktivität 74 kann durch zwei Teilinduktivitäten 74a, 74b dargestellt werden, da sich die Teilinduktivitäten 74a, 74b addieren.

Beispielsweise kann die Kapazität 75 zwischen den beiden Teilinduktivitäten 74a, 74b angeordnet sein (Figur 3a). Die Teilinduktivitäten 74a, 74b werden beispielsweise durch Leiterabschnitte 76a, 76b, die zu einem Kondensator 79 führen, gebildet. Die Leiterabschnitte 76a, 76b sind beim Ausführungsbeispiel gemäß Figur 3a gleich lang. Somit sind die parasitären Induktivitäten der beiden Leiterabschnitte 76a, 76b gleich groß und addieren sich, beispielsweise zu insgesamt 10 nH.

Der Kondensator 79 ist ein vorteilhaft diskretes Bauelement, beispielsweise ein SMD-Bauelement (Surface Mounted Device), mit einer Kapazität von wenigen Pico-Farad, zum Beispiel 2,5 Pico-Farad. Anstelle des Kondensators 79 kann auch Kapazitätsdiode 79d verwendet werden, deren Kapazität durch Anlegen einer Steuergleichspannung steuerbar ist. Zusammen mit der Induktivität 74 der Leiterabschnitte 76a, 76b ergibt sich somit eine Resonanzfrequenz fres von beispielsweise 1 GHz. Mikrowellen mit dieser Frequenz können sich in dem Hohlleiter 33 nicht ausbreiten. Es versteht sich, dass die Resonanzfrequenz fres vom Durchmesser des jeweiligen Hohlleiters abhängt. Der Durchmesser des Hohlleiters 33 ist ausreichend klein, dass sich Mikrowellen mit der Resonanzfrequenz von 1 GHz nicht in ihm ausbreiten.

Die Leiterabschnitte 76a, 76b sind beispielsweise durch an der Stirnseite 59 nach radial innen beziehungsweise außen verlängerte Abschnitte der Beschichtungen 53, 54 gebildet. Dies ist beispielsweise bei der Ausführungsform gemäß Figur 1a der Fall.

Es ist aber auch denkbar, dass die Leiterabschnitte 76a, 76b Bestandteile jeweils eines Metallstiftes 80 sind. Die Metallstifte 80, an denen z.B. die Kondensatoren 79 angeordnet sind, werden beispielsweise in das Material der Antennenkörper 50 eingegossen. Ferner ist es denkbar, Metallstifte in das dielektrische Material des Antennenkörpers 50 nachträglich einzupressen.

Dabei ist es denkbar, dass beispielsweise von radial innen und radial außen jeweils zwei Teil-Leiterstifte 80a, 80b von radial außen und radial innen in die Wandung 67 eingebracht werden, wobei ein Abstand 81 zwischen den Leiterstiften 80a, 80b die Kapazität 75 herstellt.

Bei Schwingkreisen 70b (Figur 3b) und 70c (Figur 3c) ist die Kapazität 75 radial weiter außen (70b) und einmal radial weiter innen (70c) angeordnet. Dementsprechend sind Leiterabschnitte 77a und 78b kürzer, während Leiterabschnitte 77b und 78a länger sind. Die Gesamtinduktivität der Leiterabschnitte 77a und 77b sowie 78a, 78b entspricht der Gesamtinduktivität der Leiterabschnitte 76a, 76b.

Die Leitmittel 72 können auch eine oder mehrere Hochfrequenzschaltdioden 82 aufweisen.

Ferner ist es zweckmäßig, dielektrische Körper der Aktorvorrichtung 10, zumindest soweit sie im Ausbreitungsbereich der Mikrowellen 32 liegen, gegen Feuchtigkeitseintritt oder -austritt zu schützen. Beispielsweise ist die elektrisch leitfähige Beschichtung 53, 54 derart gewählt, dass sie einen Feuchtigkeitsdurchtritt hemmt oder verhindert. Allerdings ist es möglich, dass Teilbereiche des Antennenkörpers 50 oder eines in Figur 1a gezeigten Antennenkörpers 150 frei von der elektrisch leitfähigen Beschichtung 53, 54 sind.

Beispielsweise ist der Isolationsbereich 60 des Antennenkörpers 50 an der Stirnseite 59 nicht mit den Beschichtungen 53, 54 versehen. Dort ist es zweckmäßig, dass eine elektrisch nicht leitfähige, jedoch Feuchtigkeitsdurchtritt hemmende oder verhindernde Oberflächenlage 86 vorgesehen ist. Die Oberflächenlage 86 ist beispielsweise ein Lack oder eine Beschichtung 87.

Beim Antennenkörper 50 ist als Oberflächenlage 86 z.B. ein Schutzkörper 88 vorgesehen, beispielsweise ein Feuchtigkeitsdurchtritt hemmender Ring, der vor dem stirnseitigen, ringförmigen Isolationsbereich 60 angeordnet ist.

Auch weitere Bereiche der Antennenkörper 50, 150 sind vorteilhaft mit einer Feuchtigkeitsdurchtritt hemmenden oder verhindernden Oberflächenlage 86 versehen. Beispielsweise sind der Fluidkanal 66 und die Kompensationskanäle 68 mit der Beschichtung 87 beschichtet. Alternativ wäre es denkbar, Isolationskörper in die Kanäle 66, 68 einzubringen, beispielsweise eine Hülse 89 in den Fluidkanal 66.

Im Rahmen des erfinderischen Konzepts wurde es erkannt, dass man beispielsweise für die Antennenkörper 50, 150 gegenüber Feuchtigkeitseintritt oder -austritt resistente Materialien verwenden kann, beispielsweise Keramik, geeignete Kunststoffe (Polyethylen (PE), Polypropylen (PP), Teflon (PTFE)), Silizium oder dergleichen.

Neben den Antennenkörpern 50, 150 können auch sonstige im Ausbreitungsbereich der Mikrowellen 32 liegende Dielektrika bei einer Veränderung ihrer Dielektrizitätseigenschaften die Ausbreitungsgeschwindigkeit der Mikrowellen 32 beeinflussen. Beispielsweise können im Gehäuse 13 dielektrische Körper 90 angeordnet sein. Die dielektrischen Körper 90 umfassen beispielsweise einen Gleitring 91 am Innenumfang des Mittelteils 22 sowie eine Schutzeinrichtung 92, die optional vor der Antennenanordnung 34 angeordnet sein kann und diese vor mechanischen Einflüssen, beispielsweise Druckluftstößen, dem Aufprall des Aktorglieds 14 oder dergleichen, schützen kann.

Der Gleitring 91 und die Schutzeinrichtung 92 können zweckmäßigerweise mit einer Feuchtigkeitseintritt oder -austritt hemmenden Beschichtung in der Art der Beschichtung 87 versehen sein und/oder aus einem Material bestehen, das gegenüber Feuchtigkeitseintritt oder -austritt resistent ist, beispielsweise PP, PE, Silizium oder dergleichen.

Als weitere Maßnahme, die relative Feuchtigkeit und somit die dielektrischen Eigenschaften der Antennenkörper 50 und/oder 150 sowie der Körper 90 im Wesentlichen konstant zu halten, dienen Heizeinrichtungen 95a, 95b, 95c.

Die Heizeinrichtung 95a heizt den Antennenkörper 50, wo im wesentlichen Mikrowellen im TEM-Mode auftreten. Die Heizeinrichtung 95b heizt den Gleitring 91 und die optional vorhandenen Schutzeinrichtung 92, beispielsweise einer Kunststoffplatte oder -scheibe, die der Antennenanordnung 95 in Richtung des Bewegungsraumes 12 vorgelagert ist, wo im wesentlichen Mikrowellen im E01-Mode auftreten.

Die Heizeinrichtung 95b könnte auch den dielektrischen Antennenkörper 50b heizen.

Wenn anstelle der Mikrowellen-Antennenanordnung 34 Antennenanordnungen 34c, 34d für Mikrowellen im H11- und/oder H01-Mode vorgesehen sind, sind Heizeinrichtungen 95c und 95d vorteilhaft.

Eine Heizleistung von ca. 3 bis 5 Watt ist z.B. ausreichend, um beispielsweise den Antennenkörper 50 zu beheizen.

Heizleiter 96a - 96d der Heizeinrichtungen 95a - 95d sind im Innern erwärmen das dielektrische Material z.B. der Antennenkörper 50, 50b, 50c und 50d sowie der Körper 90 oder der Schutzeinrichtungen 192, 192d, sodass Feuchtigkeit nicht in das dielektrische Material eindringt oder wieder aus dem dielektrischen Material entweicht. Somit ist das dielektrische Material trocken und weist im Wesentlichen konstante dielektrische Eigenschaften auf.

Die jeweilige Anordnung und geometrische Gestaltung der Heizleiter, z.B. von Heizleiterringen, ist abhängig vom jeweiligen Mikrowellen-Typ im Bereich der Heizleiter.

Die Heizleiter 96a - 96d sind im Wesentlichen quer, in den Ausführungsbeispielen sogar senkrecht, zum Verlauf der elektrischen Felder 97a - 97d der Mikrowellen 32 im Antennenkörper 50 und den Körpern 90 angeordnet.

So sind beispielsweise im Antennenkörper 50 und im Gleitring 91 offene Heizleiterringe 98a, 98b angeordnet. Die Heizleiterringe 98a, 98b haben einen kreisförmigen Verlauf, sodass das radiale elektrische Feld 97a, 97b senkrecht zu den Heizleiterringen 98a, 98b verläuft und durch diese nicht beeinträchtigt wird. Lediglich Anschlussleitungen 99 der offenen Heizleiterringe 98a, 98b verlaufen in radialer Richtung und somit parallel zum elektrischen Feldverlauf 97a, 97b. Die Heizleiterringe 98a verlaufen parallel zwischen den beiden Polflächen 51, 52 der Antennenanordnung 34.

Zu einer möglichst gleichmäßigen und über das gesamte Volumen eines jeweiligen dielektrischen Körpers wirksamen Erwärmung ist es zweckmäßig, mehrere Heizleiter oder Heizleiterringe vorzusehen. So sind beispielsweise in dem Antennenkörper 50 und dem Gleitring 91 in Ausbreitungsrichtung der Mikrowellen 32 mehrere Heizleiter 96a und 96b beziehungsweise mehrere Heizleiterringe 98a, 98b hintereinander angeordnet. Die Heizleiterringe 98a, 98b sind in nicht dargestellter Weise durch Verbindungsabschnitte verbunden. Es versteht sich, dass jeder der Heizleiterringe 98a, 98b auch mittels separater Anschlussleitungen 99 mit elektrischem Strom versorgt werden kann.

Es ist möglich, mehrere Heizleiterringe, die unterschiedliche Durchmesser haben, ineinander anzuordnen, um so eine möglichst große Fläche beziehungsweise ein möglichst großes Volumen zu erwärmen.

Jeder der Heizleiterringe kann über separate Anschlussleitungen mit elektrischem Strom versorgt werden. Es ist auch möglich, Heizleiterringe ineinander sozusagen zu schachteln und mittels gemeinsamer Anschlussleitungen 99 mit elektrischem Strom zu versorgen. Dieses Konzept ist bei der Heizeinrichtung 95c realisiert.

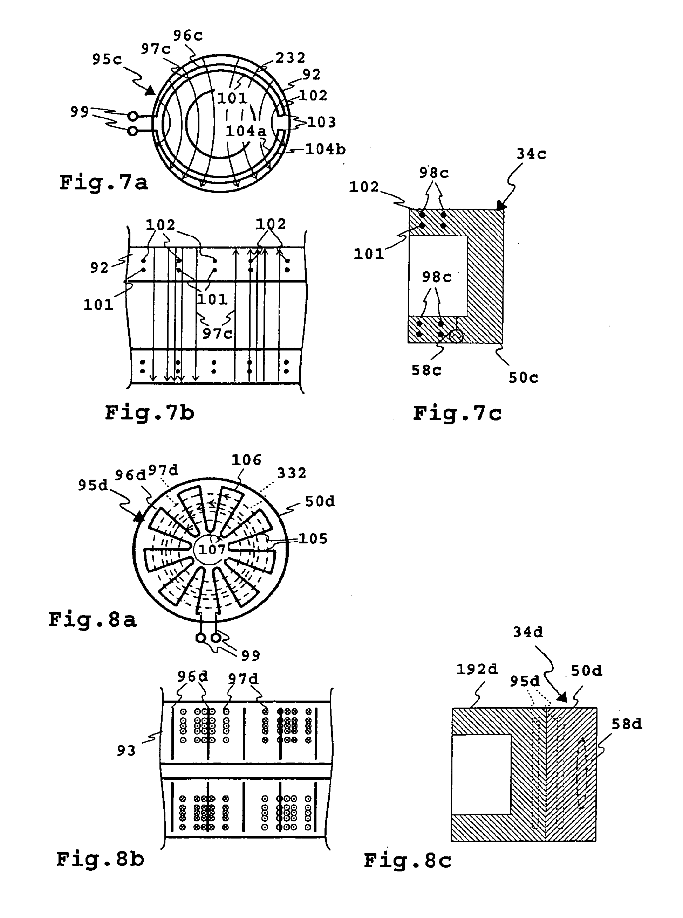

Ein erster Heizleiterring 101 ist innerhalb eines zweiten Heizleiterringes 102 angeordnet. Gemeinsame Anschlussleitungen 99 dienen zur Stromversorgung beider Heizleiterringe 101, 102. An einer den Anschlussleitungen 99 gegenüberliegenden Seite verbinden radiale Verbindungsabschnitte 103 die Heizleiterringe 101, 102. Parallel nebeneinander angeordnete, in Umfangsrichtung des zu beheizenden Schutzkörpers 88 verlaufende Heizleiterabschnitte 104a, 104b sind dann gegensinnig bestromt. Exemplarisch ist in Figur 7a, 7b ein Feldverlauf 97c von Mikrowellen 232 eingezeichnet, die in einem H11-Mode sind. Die Heizleiterringe 101, 102 verlaufen zumindest im Wesentlichen senkrecht zum Feldverlauf 97c. Im Bereich der Anschlussleitungen 99 sowie der Verbindungsabschnitte 103 ist die elektrische Feldstärke der Mikrowellen 232 geringer als im Bereich der Heizleiterringe 101, 102.

H11-Mikrowellen mit einem Feldverlauf 97c können durch eine schematische dargestellte Mikrowellen-Antennenanordnung 34c mit einer H11-Antenne 58c erzeugt werden. Die Antenne 58c ist z.B. an oder in einem dielektrischen Antennenkörper 50c angeordnet, der bei einer Aktorvorrichtung in der Art des Antennenkörpers 50 verwendbar ist.

Einer oder mehrere Heizleiter 96d einer Heizeinrichtung 95d (Figuren 8a, 8b) haben einen flügelradartigen Verlauf, der insbesondere bei einem ringförmigen, beispielsweise kreisförmigen Feldverlauf 97d zweckmäßig ist, der beispielsweise bei Mikrowellen 332 auftritt, die in einem H01-Mode sind.

Die H01-Mikrowellen können durch eine schematische dargestellte Mikrowellen-Antennenanordnung 34d mit einer H01-Antenne 58d erzeugt werden. Die Antenne 58d, die ringförmig angeordnete Dipole aufweist, ist z.B. an oder in einem Antennenkörper 50d angeordnet, der bei einer Aktorvorrichtung in der Art des Antennenkörpers 50 verwendbar ist. Eine Schutzeinrichtung 192d ist der Mikrowellen-Antennenanordnung 34d vorteilhaft vorgelagert und schützt diese vor Umwelteinflüssen. Die Heizeinrichtung 95d ist z.B. in dem Antennenkörper 50d und/oder in der Schutzeinrichtung 192d angeordnet.

Bei dem Heizleiter 96d sind radiale Heizleiterabschnitte 105 senkrecht zum Feldverlauf 97d. Die Heizleiterabschnitte 105 sind durch in Umfangsrichtung des Körpers 93 verlaufende Verbindungsabschnitte 106 miteinander verbunden. Im Bereich der Verbindungsabschnitte 106 ist das elektrische Feld der Mikrowellen 332 geringer als im Bereich der Heizleiterabschnitte 105. Jeweils zwei nebeneinander verlaufende radiale Heizleiterabschnitte 105 sind gegensinnig bestromt. Die Verbindungsabschnitte 106 liegen radial außen. Radial innen sind die Heizleiterabschnitte 105 durch bogenförmige Verbindungsabschnitte 107 miteinander verbunden. Die Verbindungsabschnitte 106 sind länger als die Verbindungsabschnitte 107.

Es versteht sich, dass mehrere der flügelradartigen Heizleiter 96d in Ausbreitungsrichtung der Mikrowellen 332 hintereinander, zweckmäßigerweise äquidistant hintereinander, angeordnet sein können, was z.B. in Figur 8b deutlich wird.

**Patentansprüche**

1. Positionsmessvorrichtung mit einer Mikrowellen-Antennenanordnung (34; 134) zur Bestimmung einer Position (29) eines in einem Bewegungsraum (12) beweglichen Messobjekts (31) anhand von Mikrowellen (32) mindestens einer ersten Frequenz (f1), wobei der Bewegungsraum (12) zumindest teilweise einen Hohlleiter (33) zum Leiten der Mikrowellen (32) bildet, wobei die Mikrowellen-Antennenanordnung (34; 134) einen dielektrischen Antennenkörper (50; 150), an dem eine erste Polfläche (51) und eine zweite Polfläche (52), die der Antennenkörper (50; 150) elektrisch voneinander isoliert, angeordnet sind, zum Einkoppeln und/oder Auskoppeln der Mikrowellen (32) in den Hohlleiter (33) aufweist, und wobei die Positionsmessvorrichtung eine Hochfrequenz-Mikrowellen-Sende-/Empfangseinrichtung (35) zum Senden und Empfangen von Mikrowellen (32) in der mindestens ersten Frequenz (f1) zur Positionsermittlung des beweglichen Messobjekts (31) aufweist, **dadurch gekennzeichnet, dass** die Hochfrequenz-Mikrowellen-Sende-/Empfangseinrichtung (35) zum Senden und Empfangen von Mikrowellen (32) in mindestens einer zweiten Frequenz (f2) zur Ermittlung mindestens einer elektrische Eigenschaft des Antennenkörpers (50; 150) ausgestaltet ist, wobei die mindestens eine elektrischen Eigenschaft des Antennenkörpers (50; 150) eine dielektrische Eigenschaft ist, und dass sie Messmittel (40) zur Ermittlung der mindestens einen elektrischen Eigenschaft des Antennenkörpers (50; 150) anhand von innerhalb des Antennenkörpers (50; 150) reflektierter Mikrowellen in der mindestens einen zweiten Frequenz (f2) aufweist.

2. Positionsmessvorrichtung nach Anspruch 1, **dadurch gekennzeichnet, dass** die mindestens eine zweite Frequenz (f2) kleiner als die mindestens eine erste Frequenz (f1) ist.

3. Positionsmessvorrichtung nach Anspruch 1 oder 2, **dadurch gekennzeichnet, dass** die mindestens eine erste Frequenz (f1) größer als eine Grenzfrequenz ist, bei der oder oberhalb derer sich Mikrowellen (32) in dem Hohlleiter (33) ausbreiten, und dass die mindestens eine zweite Frequenz (f2) kleiner als die Grenzfrequenz ist.

4. Positionsmessvorrichtung nach einem der vorhergehenden Ansprüche, **dadurch gekennzeichnet, dass** die mindestens eine elektrische Eigenschaft die Dielektrizitätszahl des Antennenkörpers (50; 150) ist.

5. Positionsmessvorrichtung nach einem der vorhergehenden Ansprüche, **dadurch gekennzeichnet, dass** an dem Antennenkörper (50; 150) Leitmittel (72) angeordnet sind, die ein Ausbreiten der Mikrowellen (32) in der mindestens einen ersten Frequenz (f1) zum Messobjekt (31) hin zulassen und die Mikrowellen (132) in der mindestens einen zweiten Frequenz (f2) zu der Sende-/Empfangseinrichtung (35) zurückleiten.

6. Positionsmessvorrichtung nach Anspruch 5, **dadurch gekennzeichnet, dass** die Sende-/Empfangseinrichtung (35) und der Hohlleiter an einander entgegengesetzten ersten und zweiten Endseiten des Antennenkörpers (50; 150) angeordnet sind, und dass die Leitmittel (72) im Bereich der zweiten Seite nahe bei dem Hohlleiter angeordnet sind, wobei die Leitmittel (72) zweckmäßigerweise im Bereich einer oder an einer Stirnseite (59) des Antennenkörpers (50; 150) angeordnet sind, die zu dem Hohlleiter (33) orientiert ist und/oder wobei die Leitmittel (72) vorteilhaft mindestens einen Schwingkreis (70; 70b; 70c; 70d) mit mindestens einer Induktivität (74) und mindestens einer Kapazität (75) umfassen.

7. Positionsmessvorrichtung nach Anspruch 6, **dadurch gekennzeichnet, dass** die mindestens eine Induktivität (74) durch zu der mindestens einen Kapazität (75) führende elektrische Leiterabschnitte (76a, 76b; 77a, 77b; 78a, 78b) gebildet ist, wobei die Leiterabschnitte (76a, 76b; 77a, 77b; 78a, 78b) zweckmäßigerweise durch eine Oberflächen-Beschichtung (53, 54) des Antennenkörpers (50; 150) oder durch elektrische Leiter, insbesondere Leiter-Stifte (80, 80a, 80b), gebildet sind, die in dem Antennenkörper (50; 150) angeordnet sind, und/oder wobei die mindestens eine Kapazität (75) zweckmäßigerweise durch einen Abstand (81) zwischen mindestens zwei der Leiterabschnitte (76a, 76b; 77a, 77b; 78a, 78b) definiert ist

8. Positionsmessvorrichtung nach einem der Ansprüche 6 oder 7, **dadurch gekennzeichnet, dass** die mindestens eine Induktivität (74) und/oder die Kapazität (75), insbesondere durch ein Bauelement (73) mit einer einstellbaren Kapazität, variierbar sind.

9. Positionsmessvorrichtung nach einem der Ansprüche 6, 7 oder 8, **dadurch gekennzeichnet, dass** der mindestens eine Schwingkreis (70; 70b; 70c; 70d) eine der mindestens einen zweiten Frequenz (f2) entsprechende Resonanzfrequenz (fres) aufweist und/oder dass sie zur Variation einer Resonanzfrequenz (fres) des mindestens einen Schwingkreises (70; 70b; 70c; 70d) zur Ermittlung der mindestens einen zweiten Frequenz (f2) ausgestaltet ist und/oder dass sie zur Ermittlung einer Resonanzfrequenz (fres) des mindestens einen Schwingkreises (70; 70b; 70c; 70d) anhand einer Variation der mindestens einen Kapazität (75) oder der Induktivität (74) des mindestens einen Schwingkreises (70; 70b; 70c; 70d) ausgestaltet ist.

10. Positionsmessvorrichtung nach einem der Ansprüche 6 bis 9, **dadurch gekennzeichnet, dass** die Messmittel (40) zur Ermittlung einer Position (29) des Messobjekts (31) in einem Nahbereich relativ zu dem Antennenkörper (50; 150) anhand der Resonanzfrequenz (fres) oder einer Verschiebung der Resonanzfrequenz (fres) ausgestaltet sind.

11. Positionsmessvorrichtung nach einem der Ansprüche 5 bis 10, **dadurch gekennzeichnet, dass** die Leitmittel (72) mindestens eine Hochfrequenz-Schaltdiode (82) umfassen.

12. Positionsmessvorrichtung nach einem der vorhergehenden Ansprüche, **dadurch gekennzeichnet, dass** die Polflächen (51, 52) einen Koaxialleiterabschnitt (57) bildend an dem Antennenkörper (50; 150) angeordnet sind.

13. Positionsmessvorrichtung nach Anspruch 12, **dadurch gekennzeichnet, dass** eine Stirnseite (59) des Koaxialleiterabschnitts (57) mit einem ringförmigen Isolationsbereich (60) zwischen den Polflächen (51, 52) in den Bewegungsraum (12) zum Messobjekt (31) hin orientiert ist.

14. Aktorvorrichtung, insbesondere elektrischer und/oder fluidtechnischer Antrieb oder Fluidventil, mit einer Positionsmessvorrichtung nach einem der vorhergehenden Ansprüche, wobei das Messobjekt (31) ein Aktorglied (14) oder ein Ventilglied der Aktorvorrichtung (10) ist.

15. Verfahren zur Bestimmung einer Position eines in einem Bewegungsraum (12) beweglichen Messobjekts (31) mit einer eine Mikrowellen-Antennenanordnung (34; 134) aufweisenden Positionsmessvorrichtung (30; 130) (29) anhand von Mikrowellen (32) mindestens einer ersten Frequenz (f1), wobei der Bewegungsraum (12) zumindest teilweise einen Hohlleiter (33) zum Leiten der Mikrowellen (32) bildet, mit den Schritten:

- Einkoppeln und Auskoppeln von Mikrowellen (32) der mindestens ersten Frequenz (f1) in den Hohlleiter (33) mit einem dielektrischen Antennenkörper (50; 150) der Mikrowellen-Antennenanordnung (34; 134), wobei an dem Antennenkörper (50; 150) eine erste Polfläche (51) und eine zweite Polfläche (52), die der Antennenkörper (50; 150) elektrisch voneinander isoliert, angeordnet sind, zur Positionsermittlung des beweglichen Messobjekts (31), **gekennzeichnet durch**

- Senden und Empfangen von Mikrowellen in mindestens einer zweiten Frequenz (f2) mit einer Hochfrequenz-Mikrowellen-Sende-/Empfangseinrichtung (35) zur Ermittlung mindestens einer elektrischen Eigenschaft des Antennenkörpers (50; 150), wobei die mindestens eine elektrische Eigenschaft des Antennenkörpers (50; 150) eine dielektrische Eigenschaft ist, und

- Ermittlung der mindestens einen elektrischen Eigenschaft des Antennenkörpers (50; 150) anhand von innerhalb des Antennenkörpers (50; 150) reflektierter Mikrowellen in der mindestens einen zweiten Frequenz (f2) mit Messmitteln (40) der Positionsmessvorrichtung (30; 130).

## Claims

1. Position sensing device with a microwave aerial arrangement (34; 134) for determining a position (29) of a movable measuring object (31) located in a movement space (12) using microwaves (32) of at least one first frequency (f1), wherein the movement space (12) at least partially forms a waveguide (33) for conducting the microwaves (32), wherein the microwave aerial arrangement (34; 134) comprises a dielectric aerial body (50; 150) on which are located a first pole face (51) and a second pole face (52) electrically isolated from each other by the aerial body (50; 150) for coupling the microwaves (32) into and/or out of the waveguide (33), and wherein the position sensing device comprises a high-frequency microwave transmitting/receiving device (35) for transmitting and receiving microwaves (32) in the at least one first frequency (f1) to determine the position of the movable measuring object (31), **characterised in that** the high-frequency microwave transmitting/receiving device (35) is designed for transmitting and receiving microwaves (32) in at least one second frequency (f2) to determine at least one electrical characteristic of the aerial body (50; 150), the at least one electrical characteristic of the aerial body (50; 150) being a dielectric characteristic, and **in that** it comprises measuring means (40) for determining the at least one electrical characteristic of the aerial body (50; 150) using microwaves in the at least one second frequency (f2) which are reflected within the aerial body (50; 150).

2. Position sensing device according to claim 1, **characterised in that** the at least one second frequency (f2) is lower than the at least one first frequency (f1).

3. Position sensing device according to claim 1 or 2, **characterised in that** the at least one first frequency (f1) is higher than a cut-off frequency at or above which microwaves (32) propagate in the waveguide (33), and **in that** the at least one second frequency (f2) is lower than the cut-off frequency.

4. Position sensing device according to any of the preceding claims, **characterised in that** the at least one electrical characteristic is the dielectric constant of the aerial body (50; 150).

5. Position sensing device according to any of the preceding claims, **characterised in that** conducting means (72) are provided on the aerial body (50; 150) which allow a propagation of the microwaves (32) in the at least one first frequency (f1) towards the measuring object (31) and which return the microwaves (132) in the at least one second frequency (f2) to the transmitting/receiving device (35).

6. Position sensing device according to claim 5, **characterised in that** the transmitting/receiving device (35) and the waveguide are located at opposite first and second end sides of the aerial body (50; 150), and **in that** the conducting means (72) are located in the region of the second side near the waveguide, the conducting means (72) being expediently located in the region of or at an end face of the aerial body (50; 150) which is oriented towards the waveguide (33) and the conducting means (72) advantageously including at least one oscillating circuit (70; 70b; 70c; 70d) with at least one inductance (74) and at least one capacitance (75).

7. Position sensing device according to claim 6, **characterised in that** the at least one inductance (74) is represented by electric conductor sections (76a, 76b; 77a, 77b; 78a, 78b) leading to the at least one capacitance (75), wherein the conductor sections (76a, 76b; 77a, 77b; 78a, 78b) are expediently formed by a surface coating (53, 54) of the aerial body (50; 150) or by electric conductors, in particular pins (80, 80a, 80b), disposed in the aerial body (50; 150), and/or wherein the at least one capacitance (75) is expediently defined by a distance (81) between at least two of the conductor sections (76a, 76b; 77a, 77b; 78a, 78b).

8. Position sensing device according to claim 6 or 7, **characterised in that** the at least one inductance (74) and/or the capacitance (75) can be varied, in particular by a component (73) with an adjustable capacitance.

9. Position sensing device according to claim 6, 7 or 8, **characterised in that** the at least one oscillating circuit (70; 70b; 70c; 70d) has a resonant frequency (fres) corresponding to the at least one second frequency (f2), and/or **in that** it is designed to determine the at least one second frequency (f2) in order to vary a resonant frequency (fres) of the at least one oscillating circuit (70; 70b; 70c; 70d), and/or **in that** it is designed to determine a resonant frequency (fres) of the at least one oscillating circuit (70; 70b; 70c; 70d) by means of a variation of the at least one capacitance (75) or the inductance (74) of the at least one oscillating circuit (70; 70b; 70c; 70d).

10. Position sensing device according to any of claims 6 to 9, **characterised in that** the measuring means (40) are designed to determine a position (29) of the measuring object (31) in a region close to the aerial body (50; 150) by means of the resonant frequency (fres) or a shift in the resonant frequency (fres).

11. Position sensing device according to any of claims 5 to 10, **characterised in that** the conducting means (72) comprise at least one high-frequency switching diode (82).

12. Position sensing device according to any of the preceding claims, **characterised in that** the pole faces (51, 52) are located on the aerial body (50; 150) while forming a coaxial conductor section (57).

13. Position sensing device according to claim 12, **characterised in that** an end face (59) of the coaxial conductor section (57) with an annular insulation region (60) between the pole faces (51, 52) is oriented into the movement space (12) towards the measuring object (31).

14. Actuator device, in particular electric and/or fluid power drive or fluid valve, with a position sensing device according to any of the preceding claims, wherein the measuring object (31) is an actuator element (14) or a valve member of the actuator device (10).

15. Method for determining a position of a movable measuring object (31) located in a movement space (12) by means of a position sensing device (30; 130) (29) with a microwave aerial arrangement (34; 134) using microwaves (32) of at least one first frequency (f1), wherein the movement space (12) at least partially forms a waveguide (33) for conducting the microwaves (32), comprising the following steps:

   - coupling microwaves (32) of the at least one first frequency (f1) into and out of the waveguide (33) with a dielectric aerial body (50; 150) of the microwave aerial arrangement (34; 134), wherein a first pole face (51) and a second pole face (52) electrically isolated from each other by the aerial body (50; 150) are located on the aerial body (15; 150), in order to determine the position of the movable measuring object (31), **characterised by**
   - transmitting and receiving microwaves in at least one second frequency (f2) with a high-frequency microwave transmitting/receiving device (35) to determine at least one electrical characteristic of the aerial body (50; 150), the at least one electrical characteristic of the aerial body (50; 150) being a dielectric characteristic, and
   - determining the at least one electrical characteristic of the aerial body (50; 150) by means of microwaves in the at least one second frequency (f2) which are reflected within the aerial body (50; 150), using measuring means (40) of the position sensing device (30; 130).

**Revendications**

1. Dispositif de mesure de position, comportant un système d'antenne à micro-ondes (34 ; 134) destiné à déterminer une position (29) d'un objet à mesurer (31), mobile dans une chambre de déplacement (12), à l'aide de micro-ondes (32) ayant au moins une première fréquence (f1), ladite chambre de déplacement (12) formant au moins partiellement un guide d'ondes (33) destiné à guider les micro-ondes (32), le système d'antenne à micro-ondes (34 ; 134) comportant un corps d'antenne (50 ; 150) diélectrique, sur lequel sont disposées une première surface polaire (51) et une deuxième surface polaire (52), que le corps d'antenne (50 ; 150) isole l'une de l'autre, pour l'injection des micro-ondes (32) dans le guide d'ondes (33) et/ou pour l'évacuation de celles-ci hors de ce dernier, et le dispositif de mesure de position comportant un émetteur-récepteur de micro-ondes à haute fréquence (35) destiné à émettre et recevoir des micro-ondes (32) dans ladite au moins une première fréquence (f1), afin de déterminer la position de l'objet à mesurer (31), **caractérisé en ce que** l'émetteur-récepteur de micro-ondes à haute fréquence (35) est configuré pour émettre et recevoir des micro-ondes (32) ayant au moins une deuxième fréquence (f2) en vue de déterminer au moins une propriété électrique du corps d'antenne (50 ; 150), ladite au moins une propriété électrique du corps d'antenne (50 ; 150) étant une propriété diélectrique, et **en ce que** ledit dispositif comporte des moyens de mesure (40) pour déterminer ladite au moins une propriété électrique du corps d'antenne (50 ; 150) à l'aide des micro-ondes de ladite au moins une deuxième fréquence (f2), réfléchies depuis l'intérieur du corps d'antenne (50 ; 150).

2. Dispositif de mesure de position selon la revendication 1, **caractérisé en ce que** ladite au moins une deuxième fréquence (f2) est inférieure à ladite au moins une première fréquence (f1).

3. Dispositif de mesure de position selon la revendication 1 ou 2, **caractérisé en ce que** ladite au moins une première fréquence (f1) est supérieure à une fréquence limite, à laquelle ou au-dessus de laquelle les micro-ondes (32) se propagent dans le guide d'ondes (33), et **en ce que** ladite au moins une deuxième fréquence (f2) est inférieure à la fréquence limite.

4. Dispositif de mesure de position selon l'une des revendications précédentes, **caractérisé en ce que** ladite au moins une propriété électrique est la permittivité diélectrique du corps d'antenne (50 ; 150).

5. Dispositif de mesure de position selon l'une des revendications précédentes, **caractérisé en ce que** sur le corps d'antenne (50 ; 150) sont disposés des moyens de guidage (72), qui autorisent une propagation des micro-ondes (32) de ladite au moins une première fréquence (f1) vers l'objet à mesurer (31) et qui redirigent vers l'émetteur-récepteur (35) les micro-ondes (132) de ladite au moins une deuxième fréquence (f2).

6. Dispositif de mesure de position selon la revendication 5, **caractérisé en ce que** l'émetteur-récepteur (35) et le guide d'ondes sont disposés sur un premier coté terminale et un deuxième côté terminal, opposés l'un à l'autre, du corps d'antenne (50 ; 150), et **en ce que** les moyens de guidage (72) sont disposés dans la zone du deuxième côté à proximité du guide d'ondes, lesdits moyens de guidage (72) étant disposés avantageusement dans la zone d'une face frontale (59) du corps d'antenne (50 ; 150) ou sur celle-ci qui est orientée vers le guide d'ondes (33) et/ou lesdits moyens de guidage (72) comportant avantageusement au moins un circuit de résonance (70 ; 70b ; 70c ; 70d) avec au moins une inductance (74) et au moins une capacité (75).

7. Dispositif de mesure de position selon la revendication 6, **caractérisé en ce que** ladite au moins une inductance (74) est formée par des segments de conduction (76a, 76b ; 77a, 77b ; 78a, 78b) électriques menant vers ladite au moins une capacité (75), lesdits segments de conduction (76a, 76b ; 77a, 77b ; 78a, 78b) étant formés avantageusement par un revêtement de surface (53, 54) du corps d'antenne (50 ; 150) ou par des conducteurs électriques, en particulier des plots conducteurs (80, 80a, 80b), qui sont disposés dans le corps d'antenne (50 ; 150), et/ou ladite au moins une capacité (75) étant définie avantageusement par une distance (81) entre au moins deux segments de conduction (76a, 76b ; 77a, 77b ; 78a, 78b).

8. Dispositif de mesure de position selon la revendication 6 ou 7, **caractérisé en ce qu'**il est possible de faire varier ladite au moins une inductance (74) et/ou la capacité (75), en particulier par un composant (73) avec une capacité réglable.

9. Dispositif de mesure de position selon les revendications 6, 7 ou 8, **caractérisé en ce que** ledit au moins un circuit de résonance (70 ; 70b ; 70c ; 70d) comporte une fréquence de résonance (fres) correspondant à ladite au moins une deuxième fréquence (f2), et/ou **en ce que** ledit dispositif est réalisé pour la variation d'une fréquence de résonance (fres) dudit au moins un circuit de résonance (70 ; 70b ; 70c ; 70d) pour déterminer ladite au moins une deuxième fréquence (f2), et/ou **en ce que** ledit dispositif est réalisé pour déterminer une fréquence de résonance (fres) dudit au moins un circuit de résonance (70 ; 70b ; 70c ; 70d) à l'aide d'une variation de ladite au moins une capacité (75) ou de l'inductance (74) dudit au moins un circuit de résonance (70 ; 70b ; 70c ; 70d).

10. Dispositif de mesure de position selon l'une des revendications 6 à 9, **caractérisé en ce que** les moyens de mesure (40) sont conçus pour déterminer une position (29) de l'objet à mesurer (31) dans une zone de proximité par rapport au corps d'antenne (50 ; 150) à l'aide de la fréquence de résonance (fres) ou d'un déplacement de la fréquence de résonance (fres).

11. Dispositif de mesure de position selon l'une des revendications 5 à 10, **caractérisé en ce que** les moyens de guidage (72) comportent au moins une diode de commande (82) à haute fréquence.

12. Dispositif de mesure de position selon l'une des revendications précédentes, **caractérisé en ce que** les surfaces polaires (51, 52) sont disposées sur le corps d'antenne (50 ; 150) en formant un segment de conduction coaxial (57).

**13.** Dispositif de mesure de position selon la revendication 12, **caractérisé en ce qu'**une face frontale (59) du segment de conduction coaxial (57) avec une zone d'isolation (60) annulaire entre les surfaces polaires (51, 52) est orienté et dans la chambre de déplacement (12) vers l'objet à mesurer (31).

**14.** Dispositif actionneur, en particulier système d'entraînement électrique et/ou fluidique ou vanne fluidique, comportant un dispositif de mesure de position selon l'une des revendications précédentes, dans lequel l'objet à mesurer (31) est un organe actionneur (14) ou un organe de vanne du dispositif actionneur (10).

**15.** Procédé destiné à déterminer une position d'un objet à mesurer (31) mobile dans une chambre de déplacement (12) au moyen d'un dispositif de mesure de position (30 ; 130) (29) muni d'un système d'antenne à micro-ondes (34 ; 134), à l'aide de micro-ondes (32) d'au moins une première fréquence (f1), ladite chambre de déplacement (12) formant au moins partiellement un guide d'ondes (33) pour le guidage des micro-ondes (32), lequel procédé comporte les étapes suivantes:

- l'injection des micro-ondes (32) de ladite au moins une première fréquence (f1) dans le guide d'ondes (33) et/ou l'évacuation de celles-ci hors de ce dernier, au moyen d'un corps d'antenne (50 ; 150) diélectrique du système d'antenne à micro-ondes (34 ; 134), une première surface polaire (51) et une deuxième surface polaire (52), que le corps d'antenne (50 ; 150), étant disposées sur le corps d'antenne (50 ; 150) isole l'une de l'autre, en vue de déterminer la position de l'objet à mesurer (31) mobile, **caractérisé par**
- l'émission et la réception de micro-ondes à au moins une deuxième fréquence (f2) avec un émetteur-récepteur de micro-ondes à haute fréquence (35), en vue de déterminer au moins une propriété électrique du corps d'antenne (50 ; 150), ladite au moins une propriété électrique du corps d'antenne (50 ; 150) étant une propriété diélectrique, et
- la détermination de ladite au moins une propriété électrique du corps d'antenne (50 ; 150) à l'aide des micro-ondes de ladite au moins une deuxième fréquence (f2), réfléchies depuis l'intérieur du corps d'antenne (50 ; 150), avec des moyens de mesure (40) du dispositif de mesure de position (30 ; 130).

Fig.1

Fig.1a

Fig.2a          Fig.2b

Fig.3a          Fig.3b          Fig.3c

Fig.4

Fig.4a

Fig.5a

Fig.5b

Fig.6a

Fig.6b

Fig.6c

Fig.7a

Fig.7b

Fig.7c

Fig.8a

Fig.8b

Fig.8c

**EP 2 047 292 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10205904 A1